# FASCICULE DE BREVET EUROPEEN

(11) **EP 3 434 743 B1**
(45) Date de publication et mention de la délivrance du brevet: **16.06.2021**
(21) Numéro de dépôt: 18183750.1
(22) Date de dépôt: 16.07.2018
(51) Int. Cl.: C09D 129/04, C09D 5/20, C08L 29/04

(54) **COMPOSITION POLYMERIQUE AQUEUSE FORMANT UN FILM PELABLE POUR ERODER UN SUBSTRAT, FILMS PELABLE ET PELE OBTENUS ET LEUR PROCEDE D'OBTENTION**
WÄSSRIGE POLYMERZUSAMMENSETZUNG, DIE EINE ABZIEHBARE FOLIE ZUM ERODIEREN EINES SUBSTRATS BILDET, SO ERHALTENE ABZIEHBARE UND ABGEZOGENE FOLIEN UND IHR HERSTELLUNGSVERFAHREN
AQUEOUS POLYMERIC COMPOSITION FORMING A PEELABLE FILM TO ERODE A SUBSTRATE, PEELABLE AND PEELED FILMS OBTAINED AND METHOD OF OBTAINING THEM

(30) Priorité: 24.07.2017 FR 1757022
(43) Date de publication de la demande: 30.01.2019
(73) Titulaire: Soletanche Freyssinet, 92500 Rueil-Malmaison (FR)
(72) Inventeur: SARRAF, Riad, 50460 Querqueville (FR); CRESPIN, Aurore, 50690 Hardinvast (FR); BOUTTIER, Anne-Laure, 50340 Les Pieux (FR)
(74) Mandataire: Plasseraud IP

(56) Documents cités:
- US-A- 3 053 787

## Description

La présente invention concerne une composition polymérique aqueuse apte à former, après application puis séchage sur un substrat à décontaminer ou dépolluer, un film pelable apte à éroder ce substrat, un procédé de préparation de la composition, les films pelable et pelé ainsi formés et leur procédé d'obtention. L'invention s'applique notamment à la décontamination par pelage dudit film de tout substrat pour le débarrasser d'une contamination surfacique fixée (i.e. de particules contaminantes incrustées dans une couche superficielle du substrat et/ou fortement liées physiquement ou chimiquement à sa surface) et optionnellement en outre non fixée (i.e. de particules déposées à la surface du substrat en y étant faiblement liées). L'invention s'applique en particulier à la décontamination de tels substrats dans le domaine nucléaire (i.e. dans des installations avec contamination radioactive), ou de la métallurgie pour le traitement de surface de substrats métalliques en vue de traitements secondaires (par exemple pour des circuits imprimés), tels qu'une passivation, des finitions métalliques, des vernis-épargne, des multicouches à déposer ou un assemblage à réaliser sur le substrat traité, à titre non limitatif.

Il est connu de décontaminer des substrats formant des structures industrielles ou parois diverses qui sont le siège d'une contamination non fixée, par application puis séchage d'une composition polymérique aqueuse à la surface du substrat afin d'y former un film pelable y adhérant, comme décrit dans WO 2013/023021 A1 qui enseigne de capturer sélectivement les seules cibles contaminantes présentes sur cette surface par pelage du film. La composition divulguée dans ce document forme un hydrogel à base d'un alcool polyvinylique et comprenant essentiellement, sous forme de particules solides dispersées, un agent de capture de ces cibles par affinité chimique (cf. « sequestering agent » en anglais) et un agent thixotrope, cette composition présentant un pH égal ou supérieur à 3.

Un inconvénient de la composition de film pelable selon ce document réside dans le fait qu'elle n'est pas apte à permettre une extraction de contaminants fixés dans une couche superficielle du substrat, mais uniquement de capturer des contaminants affleurant à sa surface via leur affinité avec un agent de capture choisi à cet effet. Il en résulte une décontamination du substrat sur sa seule surface externe qui est limitée aux contaminants spécifiquement non fixés capturés par le film en cours de séchage.

EP 0 864 377 B1 divulgue le nettoyage d'un substrat couvert de corps étrangers non fixés tels que des poussières, par application puis séchage d'une composition polymérique aqueuse à base d'un alcool polyvinylique à la surface du substrat afin d'y former un film pelable auquel adhèrent ces corps étrangers. La composition doit présenter une viscosité d'au moins 5000 mPa.s lors de son application, et présente l'inconvénient de ne pas permettre non plus une extraction de contaminants fixés au substrat.

EP 1 469 482 B1 présente une composition en solution aqueuse formant une mousse lavable pour la décontamination d'un substrat incorporant des contaminants surfaciques de type fixés. La composition est obtenue par mélange d'une première solution aqueuse acide de cérium IV (contenant entre 10 et 20 % en masse de nitrate de cérium ammonium) avec une seconde solution aqueuse comprenant un tensioactif non ionique que le cérium IV oxyde pour l'obtention d'une mousse qui est ainsi appliquée sur le substrat, puis rincée à l'eau. Du fait de la réaction d'oxydation du tensioactif par le cérium IV dans la mousse formée mais non encore appliquée, il reste peu de cérium IV (réduit en cérium III par l'action du tensioactif) disponible pour attaquer le substrat, ce qui limite l'épaisseur érodée de ce dernier à au plus 0,5 µm, érosion jugée suffisante pour atteindre les seuls contaminants incrustés dans des irrégularités de surface du substrat.

La mousse aqueuse divulguée dans ce dernier document présente comme inconvénients de ne procurer qu'une érosion réduite du substrat et d'impliquer un traitement des effluents liquides obtenus suite au lavage de la mousse appliquée sur le substrat.

US 3 053 787 A divulgue une composition comprenant un polyvinylacétate hydrolysé, un monomère alkylènebisacrylamide soluble dans l'eau et, comme agent oxydant du polyvinylacétate, une quantité réduite d'un sel cérique soluble dans l'eau, pour coller deux couches de papier l'une à l'autre.

Un but de la présente invention est de proposer une composition polymérique aqueuse qui permette de remédier au moins en partie à l'ensemble des inconvénients précités, et ce but est atteint en ce que la Demanderesse vient de découvrir d'une manière inattendue que la réaction chimique entre un alcool polyvinylique préalablement dissous dans un solvant aqueux et intégré à un premier composant filmogène, et un second composant oxydant à cation métallique par exemple choisi parmi le cérium IV, le cobalt Il et l'argent I permet d'obtenir, du fait d'une dégradation par l'agent oxydant de la chaîne polymérique de l'alcool polyvinylique, cette composition qui forme après application puis séchage sur un substrat à décontaminer ou dépolluer un film pelable adhérant à une surface du substrat et apte à éroder ce substrat en en transférant une couche superficielle oxydée sur le film pelé.

On notera qu'une composition selon l'invention, obtenue par cette réaction entre ledit agent oxydant et ledit l'alcool polyvinylique en solution aqueuse qui se traduit par une coupure de sa chaîne polymérique, permet d'extraire du substrat les contaminants qui y sont fixés même en profondeur et *a fortiori* en outre ceux qui n'y sont pas ou peu fixés sur ladite surface, grâce à cette érosion du substrat suivant une épaisseur érodée avantageusement supérieure à 0,10 µm (de préférence supérieure à 0,50 µm, voire à 0,70 µm et par exemple comprise entre 0,80 µm et 1,50 µm) pour une ou plusieurs application(s) de la composition sur le substrat (appliquée par un opérateur au moyen d'au moins un pinceau, rouleau ou spatule, à titre non limitatif, ou par des moyens automatisés au contact ou à distance du substrat).

On notera également que d'une manière surprenante ledit second composant oxydant est compatible avec l'étape critique de séchage de la composition incorporant l'alcool polyvinylique préalablement mélangé à d'autres ingrédients du premier composant filmogène et modifié par ce second composant, pour l'obtention d'un film suffisamment résistant au séchage et aisément pelable (avantageusement d'un seul tenant) suite à ce séchage. Cela témoigne d'un effet de synergie inattendu entre l'alcool polyvinylique en solution aqueuse préalablement intégré au premier composant et le second composant oxydant qui le modifie de cette manière.

Plus précisément, une composition polymérique aqueuse selon l'invention est telle que définie à la revendication 1 annexée, où l'agent oxydant, formé d'un complexe à cation métallique et par exemple choisi parmi le cérium IV, le cobalt II et l'argent I, est présent dans la composition selon une fraction massique comprise entre 20 % et 45 %.

A titre de substrat recevant une composition selon l'invention, on peut utiliser toute pièce ou partie de pièce au moins partiellement métallique ou non métallique, par exemple minérale dans ce dernier cas (y compris des composites) à décontaminer ou à dépolluer, telle qu'une paroi d'un bâtiment (e.g. mur, cloison, plancher, plafond), une cuve, une machine ou une conduite de fluide, à titre non limitatif. On peut notamment citer des substrats métalliques réalisés en un métal ou alliage de métaux choisi parmi les aciers inoxydables (e.g. 304, 304L, 316 ou 316L, à titre non limitatif), et des substrats minéraux par exemple en béton.

D'une manière générale, ledit au moins un alcool polyvinylique utilisable dans les compositions de l'invention est hydrosoluble et peut être un homopolymère d'alcool vinylique (PVA, PVAL ou encore PVOH en abrégé, tel que ceux commercialisés par Kuraray sous la dénomination Poval® avec un degré molaire d'hydrolyse supérieur à 80 %,
par exemple Poval® 40-88) ou un copolymère d'alcool vinylique (par exemple un copolymère éthylène-alcool vinylique, EVOH en abrégé, tel que ceux commercialisés par Kuraray sous la dénomination Exceval® avec un degré molaire d'hydrolyse supérieur à 90 %, par exemple Exceval® HR-3010).

Avantageusement, les alcools polyvinyliques utilisables dans l'invention peuvent être partiellement ou totalement hydrolysés avec un degré molaire d'hydrolyse supérieur à 70 %, de préférence égal ou supérieur à 80 %, voire à 90 % ou à 95 %, étant rappelé qu'un tel alcool polyvinylique est issu de manière connue de l'hydrolyse en milieu basique de l'acétate de polyvinyle.

Encore plus avantageusement, les alcools polyvinyliques utilisables dans l'invention peuvent présenter une viscosité Brookfield mesurée à 20° C comprise entre 10 mPa.s et 50 mPa.s, de préférence entre 20 mPa.s et 30 mPa.s.

Egalement avantageusement, une composition selon l'invention peut présenter lors de ladite application une viscosité dynamique Brookfield, mesurée à 20° C, qui est inférieure à 5000 mPa.s, de préférence comprise entre 1000 mPa.s et 3000 mPa.s et encore plus préférentiellement entre 1500 mPa.s et 2500 mPa.s.

La Demanderesse a établi que ces plages de viscosité sont particulièrement bien adaptées à l'obtention d'un film pelable suffisamment flexible et résistant pendant et après son séchage.

A titre de solvant aqueux utilisable dans une composition selon l'invention, on utilise de préférence de l'eau, étant précisé que l'on peut utiliser, en plus dudit solvant aqueux dans ledit premier composant, un solvant non aqueux (tel que de l'éthanol) présentant par exemple un point d'ébullition inférieur à 100° C à la pression atmosphérique (1,013. 10⁵ Pa), pour contrôler la durée et l'efficacité de l'étape de séchage.

De préférence, ledit agent oxydant est présent dans ladite composition de l'invention selon une fraction massique comprise entre 21 % et 35 %.

On notera que cette fraction massique relativement élevée d'agent oxydant et donc dudit cation permet de dégrader l'alcool polyvinylique pour l'obtention conjointe d'un film résistant au séchage et adhérant au substrat tout en étant apte par son pelage à retirer ladite couche superficielle suivant une épaisseur supérieure à 0,10 µm, de préférence supérieure à 0,50 µm et pouvant atteindre 1 µm.

Selon un exemple de réalisation de l'invention, ledit cation est le cérium IV, ledit complexe étant de préférence choisi parmi les nitrates de cérium et d'ammonium (e.g. de formule Ce(NO₃)₄(NH₄NO₃)₂), les sulfates de cérium (e.g. de formule Ce(SO₄)₂) et les nitrates de cérium électro-régénérés en milieu acide (Ce(NOₐ)₄).

La Demanderesse a vérifié que le film pelable obtenu après application et séchage de cette composition bi-composant de l'invention présente de manière surprenante les propriétés contradictoires suivantes :
- il sèche de façon contrôlée à la surface du substrat (tant métallique que non métallique, par exemple minéral) en demeurant suffisamment souple et résistant,
- il adhère suffisamment à ce substrat mais pas trop afin de pouvoir être pelé d'un seul tenant, et
- il contient ledit agent oxydant sous sa forme oxydante active en quantité suffisamment élevée pour réaliser une attaque chimique en profondeur du substrat.

Avantageusement, une composition selon l'invention peut être appliquée comme une peinture capable d'interagir avec une couche superficielle du substrat entre l'instant de son application et son séchage complet sous la forme du film pelable, avec un temps d'action et de séchage entre les instants d'application et de retrait du film qui peut être compris entre 6 heures et 72 heures (de préférence entre 24 heures et 48 heures) et qui est compatible avec les exigences inhérentes aux opérations de décontamination.

De plus, ladite composition présente le double avantage de générer une érosion contrôlée (épaisseur érodée par exemple comprise entre 0,50 µm et 1,50 µm) par la quantité de composition utilisée à chaque application et donc d'agent oxydant actif disponible dans le film pelable obtenu, et de ne produire aucun effluent liquide à traiter une fois le film retiré vu qu'il est avantageusement apte à être aisément retiré d'un seul tenant sans requérir de fluide additionnel tel qu'un liquide pour ce retrait.

Avantageusement, ledit premier composant filmogène peut comprendre en outre une charge inorganique choisie dans le groupe constitué par les alumines, les hydroxydes de magnésium, le dioxyde de titane, les silices hydrophiles et un mélange d'au moins deux de ces charges.

De préférence, ladite charge inorganique comprend ledit dioxyde de titane selon un ratio massique dioxyde de titane / cation métallique supérieur à 0,4, plus préférentiellement compris entre 0,5 et 1,5 et encore plus préférentiellement compris entre 1 et 1,4, le dioxyde de titane pouvant être avantageusement présent dans la composition selon une fraction massique comprise entre 20 % et 42 %.

A la place ou en plus dudit dioxyde de titane, la composition selon l'invention peut comprendre, selon une fraction massique comprise entre 0,5 % et 10 %, une dite silice hydrophile à titre d'agent épaississant.

D'une manière générale en référence à l'une ou l'autre des caractéristiques précitées, ladite réaction entre ledit premier composant et ledit second composant peut être mise en œuvre en milieu acide ou neutre, étant précisé que cette réaction est de préférence mise en œuvre en milieu acide de pH inférieur à 3 de sorte que ladite composition soit apte à décaper par attaque acide ledit substrat, qu'il soit métallique (e.g. en acier inoxydable) ou non (e.g. en un matériau minéral, tel que du béton).

On notera que dans le cas où ledit substrat à éroder est minéral, par exemple en béton, l'on utilise avantageusement une composition à appliquer présentant ce pH très acide qui est inférieur à 3 et de préférence compris entre 0,5 et 2.

Dans le cas préférentiel où ladite réaction est mise en œuvre en milieu acide :
- ledit au moins un alcool polyvinylique peut avantageusement comporter des groupes acide, de préférence des groupes acide acétique issus d'une hydrolyse de groupes acétate (ce qui peut suffire à conférer ce pH très acide à la composition de l'invention), et/ou
- ledit second composant peut comprendre en outre un acide minéral selon une fraction massique dans la composition de préférence comprise entre 0,1 % et 4 %, par exemple l'acide nitrique (cet acide minéral est notamment utilisable dans le cas où ledit au moins un alcool polyvinylique ne contient que peu ou pas de groupes acide pour l'obtention de ce pH très acide).

Selon un autre aspect de l'invention, ladite composition peut comprendre :
- ledit au moins un alcool polyvinylique selon une fraction massique comprise entre 20 % et 60 %, de préférence entre 25 % et 45 %,
- ledit solvant aqueux, tel que de l'eau, selon une fraction massique comprise entre 1 % et 5 %, et
- ledit agent oxydant (de préférence un dit complexe de cérium IV qui est choisi parmi les nitrates de cérium et d'ammonium, les sulfates de cérium et les nitrates de cérium électro-régénérés en milieu acide).

De préférence, ledit premier composant filmogène comprend en outre :
- une charge inorganique selon une fraction massique dans la composition comprise entre 20 % et 45 % (comprenant de préférence du dioxyde de titane selon un ratio massique dioxyde de titane / cation compris entre 1,1 et 1,4),
- un agent plastifiant selon une fraction massique dans la composition comprise entre 1 % et 10 %, comprenant de préférence du glycérol selon une fraction massique dans la composition entre 3 % et 6 %, et
- un agent de mise en forme selon une fraction massique comprise entre 0,5 % et 3 %.

On notera que ledit agent plastifiant permet avantageusement de modifier les propriétés de la composition appliquée sur le substrat après son séchage, pour obtenir un film présentant une flexibilité et/ou une aptitude au pelage améliorée(s).

On notera également qu'une composition selon l'invention peut comprendre en outre d'autres ingrédients usuellement employés dans des compositions de films, telles que (à titre non limitatif) :
- un agent absorbant compris inclus dans ladite charge inorganique ou bien utilisé en plus de cette dernière, tel que de la bentonite,
- un agent de dilution (e.g. un acide gras) par exemple présent dans la composition selon une fraction massique inférieure à 0,05 %, et/ou
- un agent anti-oxydant (e.g. un ester) par exemple présent dans la composition selon une fraction massique inférieure à 0,03 %.

Un procédé de préparation selon l'invention d'une composition polymérique aqueuse telle que définie ci-dessus comprend, immédiatement avant ladite application de la composition, un mélangeage :
- dudit premier composant comprenant ledit solvant aqueux, ledit au moins un alcool polyvinylique comportant optionnellement des groupes acide, et une pluralité d'ingrédients de mise en œuvre comprenant de préférence une charge inorganique, un agent plastifiant et un agent de mise en forme, et
- dudit second composant comprenant ledit agent oxydant, et optionnellement un acide minéral, par exemple l'acide nitrique.

On notera que l'on mélange ainsi intimement ledit agent oxydant à un pré-mélange filmogène formant ledit premier composant, ce qui permet d'obtenir, par application immédiate sur le substrat suivie d'un séchage, ledit film présentant les qualités recherchées de résistance au séchage, de flexibilité et d'aptitude au pelage.

Un film pelable selon l'invention est obtenu par application d'une composition polymérique aqueuse sur un substrat à décontaminer ou dépolluer, puis par séchage de la composition appliquée sur le substrat de telle sorte que le film adhère au substrat, ce film pelable étant obtenu par séchage d'une composition selon l'invention telle que définie ci-dessus et étant apte à éroder le substrat par oxydation en transférant sur le film pelé une couche superficielle du substrat d'épaisseur supérieure à 0,10 µm pour 0,5 à 2 kg/m² de la composition appliquée sur le substrat.

On notera que cette masse de composition de film selon l'invention appliquée par unité de surface du substrat métallique, qui peut être d'au moins 0,5 kg/m² pour le transfert sur le film de plus de 10 µm d'épaisseur de ce substrat métallique, est donnée à titre non limitatif, et qu'un film pelable selon l'invention est obtenu par une ou plusieurs applications (i.e. une ou plusieurs couches présentant par exemple chacune une épaisseur de 0,3 µm) de la composition sur le substrat.

Avantageusement, le film pelable selon l'invention peut être retiré d'un seul tenant par un opérateur par exemple sous la forme d'un lé (i.e. bande plus ou moins étroite de forme rectangulaire, analogue à un panneau décollable), en exerçant un effort modéré de traction.

Un film pelé selon l'invention est obtenu par retrait de ce film pelable, et ce film pelé présente une face interne séparée du substrat et revêtue de ladite couche superficielle, laquelle peut être au moins en partie :
- métallique, par exemple en acier inoxydable, ou bien
- non métallique, par exemple minérale (e.g. en béton), ledit au moins un alcool polyvinylique comportant dans ce cas des groupes acide et/ou le second composant comprenant un acide minéral, par exemple l'acide nitrique.

Avantageusement, ladite couche superficielle du film pelé peut présenter une épaisseur supérieure à 0,30 µm, de préférence égale ou supérieure à 0,70 µm et encore plus préférentiellement égale ou supérieure à 1 µm. Cette épaisseur d'érosion du substrat définie par ladite couche superficielle est par exemple comprise entre 0,80 µm et 1,50 µm.

On notera que ce film pelé selon l'invention porte ainsi par la couche superficielle qui y adhère une trace détectable du substrat contaminé ou pollué, sur lequel la composition dont il est issu a été appliquée.

On notera également que ce film pelé emporte avantageusement, à chaque application de la composition dont il est issu sur le substrat, la contamination surfacique fixée (i.e. de particules contaminantes incrustées dans ladite couche superficielle et/ou fortement liées à sa surface) et *a fortiori* non fixée à la surface de ce substrat.

On notera en outre que ce film selon l'invention est compatible avec l'élimination des déchets radioactifs dans le domaine nucléaire.

Un procédé selon l'invention d'obtention dudit film pelable est caractérisé en ce qu'il comprend successivement :
a) une préparation de la composition selon ledit procédé de préparation de cette composition présenté ci-dessus,
b) au moins une application par exemple au pinceau, au rouleau ou à la spatule de la composition sur ledit substrat immédiatement après l'étape a), puis
c) un séchage de la composition appliquée à une température comprise entre 10 et 30° C et pendant une durée comprise entre 6 et 72 heures, de préférence entre 24 heures et 48 heures.

D'autres caractéristiques, avantages et détails de la présente invention ressortiront à la lecture de la description suivante de plusieurs exemples de réalisation de l'invention, donnés à titre illustratif et non limitatif.

### Exemples de compositions et de films testés :

On a préparé des compositions polymériques aqueuses selon l'invention et non conformes à l'invention et testé les films obtenus sur un substrat métallique constitué d'une plaque en acier inoxydable de dénomination 304 dont une surface plane (d'aire 15 cm x 15 cm = 225 cm²) est revêtue de chaque composition testée, en utilisant pour le premier composant de chaque composition testée la base suivante commercialisée par la société Sana sous le nom commercial « film de purge », base inchangée d'un essai à l'autre et répondant à la formulation suivante :
- 81 % d'une solution aqueuse à 15 % d'un alcool polyvinylique constitué d'un PVOH de degré molaire d'hydrolyse égal à 88 % (dans l'eau froide) et de masse moléculaire moyenne en poids intermédiaire,
- 11,85 % d'agent plastifiant (glycérol pharmaceutique),
- 3,0 % d'agent de mise en forme constitué d'un copolymère éthylène-vinyle acétate (agent filmogène),
- 0,1 % d'agent de dilution (acide gras en C16-C18),
- 0,05 % d'agent antioxydant (ester de type propionate d'octadécyle),
- 4,0 % d'eau dé-ionisée.

On a ajouté à cette base une ou plusieurs charges inorganiques et/ou un agent épaississant pour l'obtention du premier composant, constitués d'une silice hydrophile, d'alumine, d'hydroxyde magnésium et/ou de dioxyde de titane, selon les essais.

Pour certains essais, on a en outre ajouté à cette base de l'éthanol à titre de solvant non aqueux (point d'ébullition de 78,37 % à 1,013. 10⁵ Pa) pour le premier composant.

Le second composant de chaque composition testée était constitué d'un même agent oxydant formé de nitrate de cérium et d'ammonium (de formule Ce(NO₃)₆(NH₄)₂, commercialisé par la société Ampère Industrie) et utilisé selon une fraction massique variable.

Quelques minutes après avoir procédé à un mélangeage intime du premier composant (pré-mélangé) avec le second composant, l'on a obtenu et appliqué environ 30 g de chaque composition (de pH compris entre 1 et 3) à l'aide d'une spatule, et l'on a laissé sécher chaque composition appliquée à l'air libre à 20° C environ pendant une durée comprise entre 24 heures et 72 heures.

Le tableau 1 ci-après présente l'érosion obtenue avec une composition I1 selon l'invention comprenant une silice hydrophile à titre d'agent épaississant.

**Tableau 1 :**

| **Fraction massique dans la composition (%)** | | | | **Erosion mesurée du substrat (µm)** |
|---|---|---|---|---|
| | **Base** | **Ce(NO₃)₆(NH₄)₂** | **Silice hydrophile** | |
| I1 | 73,4 | 24,2 | 2,4 | 0,15 |

On a ainsi obtenu grâce à la silice hydrophile une composition suffisamment épaisse formant après séchage un film aisément pelable permettant suite à son pelage d'éroder le substrat en acier inoxydable d'une épaisseur supérieure à 0,10 µm, par l'adhésion au film pelé d'une couche superficielle du substrat.

On a cherché à augmenter l'érosion obtenue sur le même substrat en acier inoxydable en augmentant le temps de séchage, via le remplacement de la silice hydrophile par de l'eau, comme visible au tableau 2 relatif à des compositions T1, T2, T3 non conformes à l'invention.

**Tableau 2 :**

| **Fraction massique dans la composition (%)** | | | | **Erosion mesurée du substrat (µm)** |
|---|---|---|---|---|
| | **Base** | **Ce(NO₃)₆(NH₄)₂** | **Eau** | |
| T1 | 71,8 | 23,9 | 4,3 | 0,06 |
| T2 | 68,6 | 22,9 | 8,5 | 0,06 |
| T3 | 62,2 | 20,8 | 17,0 | 0,06 |

Ces résultats montrent que l'apport d'eau liquide dans le premier composant, en plus de celle déjà présente dans la base, réduit de manière excessive la viscosité de la composition appliquée qui a tendance à s'écouler sur le substrat, ce qui pénalise l'érosion obtenue après le séchage (toujours inférieure à 0,10 µm).

On a cherché à augmenter l'érosion obtenue sur ces mêmes substrats en combinant la silice hydrophile et l'eau ajoutées à la base du premier composant, comme visible au tableau 3 relatif à des compositions I2, I3, I4 selon l'invention.

**Tableau 3 :**

| **Fraction massique dans la composition (%)** | | | | | **Erosion mesurée du substrat (µm)** |
|---|---|---|---|---|---|
| | **Base** | **Ce(NO₃)₆(NH₄)₂** | **Eau** | **Silice hydrophile** | |
| I2 | 63,13 | 24,80 | 2,60 | 9,40 | 0,12 |
| I3 | 60,52 | 20,24 | 17,28 | 1,97 | 0,12 |
| I4 | 71,30 | 23,78 | 2,55 | 2,34 | 0,14 |

Pour chaque composition I2, I3, I4, l'ajout d'eau à la silice a eu pour effet d'allonger la durée de séchage d'une heure au maximum en réduisant le relargage indésirable d'acide lors du séchage, et d'augmenter l'érosion par rapports aux essais avec les compositions T1, T2, T3 (mais pas par rapport à l'essai initial avec la composition I1 qui avait conduit à un séchage moins long).

Ces résultats montrent que l'érosion obtenue n'est pas uniquement liée à la durée du séchage, et que la concentration en agent oxydant et éventuellement d'autres paramètres de la composition tels que son pH, par exemple, peuvent également influer sur l'érosion obtenue.

Comme visible au tableau 4, on a préparé huit autres compositions I5 à I12 selon l'invention en cherchant également à allonger la durée de séchage tout en veillant à obtenir un film pelable :
- en remplaçant aux compositions I6 à I9 l'eau ajoutée aux compositions I2, I3, I4 par de l'éthanol, et
- en utilisant de l'alumine, de l'hydroxyde de magnésium (MgOH) et du dioxyde de titane (TiO₂) à titre de charge inorganique aux compositions I7 à 112, pour y améliorer la résistance du film pelable obtenu.

**Tableau 4 :**

| **Fraction massique dans la composition (%)** | | | | | | | **Erosion mesurée du substrat (µm)** |
|---|---|---|---|---|---|---|---|
| | **Base** | **Ce(NO₃)₆(NH₄)₂** | **Ethanol** | **Alumine** | **MgOH** | **TiO₂** | |
| I5 | 66,7 | 33,3 | | | | | 0,22 |
| I6 | 54,3 | 32,6 | 13,0 | | | | 0,17 |
| I7 | 64,3 | 24,9 | 10,3 | 0,6 | | 2,34 | 0,26 |
| I8 | 46,1 | 35,1 | 17,5 | | 1,2 | | 0,16 |
| I9 | 51,0 | 25,5 | 22,1 | | | 1,4 | 0,30 |
| I10 | 62,0 | 37,2 | | | | 0,8 | 0,26 |
| I11 | 61,0 | 36,7 | | 2,21 | | | 0,16 |
| I12 | 61,6 | 37,2 | | | 1,16 | | 0,16 |

On notera que la composition I9 selon l'invention est la plus avantageuse en termes d'érosion obtenue (0,30 µm) par le pelage du film correspondant, les autres compositions I5-I8 et I10-I12 procurant néanmoins une érosion toujours supérieure à 0,15 µm.

Comme visible au tableau 5, on a préparé quatre autres compositions I13 à I16 selon l'invention uniquement avec du dioxyde de titane comme charge inorganique (essais réalisés après 24 heures de séchage de ces compositions appliquées sur le substrat).

**Tableau 5 :**

| **Fraction massique dans la composition (%)** | | | | **Erosion mesurée du substrat (µm)** |
|---|---|---|---|---|
| | **Base** | **Ce(NO₃)₆(NH₄)₂** | **TiO₂** | |
| I13 | 44,6 | 24,4 | 30,9 | 0,22 |
| I14 | 40,0 | 33,3 | 26,7 | 0,14 |
| I15 | 35,3 | 41,2 | 23,5 | 0,28 |
| I16 | 31,6 | 47,4 | 21,0 | 0,17 |

Ces compositions I13 à I16 donnent toutes un film pelable procurant une érosion supérieure à 0,10 µm, voire à 0,20 µm pour I13 et I15.

De plus, c'est la composition I13 avec environ 30 % de dioxyde de titane et environ 25 % de complexe de cérium qui donne le film le plus résistant après séchage (i.e. ratio massique TiO₂ / Ce d'environ 1,27), film qui est le plus facilement retiré par pelage du substrat, mais c'est la composition I15 (avec un ratio massique TiO₂ / Ce d'environ 0,57) qui donne une érosion augmentée (proche de 0,30 µm).

Des essais complémentaires de reproductibilité portant sur le même substrat ont confirmé ces résultats satisfaisants en termes de pelabilité du film et d'érosion obtenue pour ces compositions I13 et I15, comme visible aux tableaux 6 et 7 (essais réalisés après 24 heures de séchage de ces compositions appliquées sur le substrat).

**Tableau 6 :**

| **Fraction massique dans la composition (%)** | | | | **Erosion mesurée du substrat (µm)** |
|---|---|---|---|---|
| | **Base** | **Ce(NO₃)₆(NH₄)₂** | **TiO₂** | |
| I13 | 44,6 | 24,4 | 30,9 | 0,14 |
| I13 | 44,6 | 24,4 | 30,9 | 0,17 |
| I13 | 44,6 | 24,4 | 30,9 | 0,18 |
| I13 | 44,6 | 24,4 | 30,9 | 0,17 |

Il en résulte une érosion moyenne mesurée de 0,17 µm pour le substrat pourvu d'un film selon la composition I13, lequel film est suffisamment résistant après séchage et s'avère aisément pelable.

**Tableau 7 :**

| **Fraction massique dans la composition (%)** | | | | **Erosion mesurée du substrat (µm)** |
|---|---|---|---|---|
| | **Base** | **Ce(NO₃)₆(NH₄)₂** | **TiO₂** | |
| I15 | 35,3 | 41,2 | 23,5 | 0,31 |
| I15 | 35,3 | 41,2 | 23,5 | 0,27 |
| I15 | 35,3 | 41,2 | 23,5 | 0,28 |

Il en résulte une érosion moyenne mesurée de 0,29 µm pour le substrat pourvu d'un film selon la composition I15, lequel film est également résistant après séchage et s'avère pelable.

On a réalisé des essais complémentaires avec du dioxyde de titane à titre de charge inorganique selon une fraction massique dans la composition encore plus élevée (environ 40 %) et suivant un ratio massique TiO₂ / Ce d'environ 1,27 comme pour la composition I13, comme visible aux quatre autres essais de reproductibilité du tableau 8 concernant une nouvelle composition I17 selon l'invention.

**Tableau 8 :**

| **Fraction massique dans la composition (%)** | | | | **Erosion mesurée du substrat (µm)** |
|---|---|---|---|---|
| | **Base** | **Ce(NO₃)₆(NH₄)₂** | **TiO₂** | |
| I17 | 27,4 | 32,0 | 40,6 | 0,25 |
| I17 | 27,4 | 32,0 | 40,6 | 0,36 |
| I17 | 27,4 | 32,0 | 40,6 | 0,32 |
| I17 | 27,4 | 32,0 | 40,6 | 0,31 |

Il en résulte une érosion moyenne mesurée de 0,31 µm pour le substrat pourvu d'un film selon la composition I17, lequel film est suffisamment résistant après un séchage de 72 heures et s'avère pelable.

## Revendications

1. Composition polymérique aqueuse apte à former, après application puis séchage sur un substrat à décontaminer ou dépolluer, un film pelable qui revêt une surface du substrat en y adhérant, la composition comprenant un solvant aqueux et au moins un alcool polyvinylique soluble dans ledit solvant, **caractérisée en ce que** la composition comprend le produit d'une réaction chimique entre un premier composant filmogène et un second composant oxydant de la composition, ledit premier composant comprenant ledit solvant aqueux et ledit au moins un alcool polyvinylique, ledit second composant comprenant un agent oxydant formé d'un complexe à cation métallique et présent dans la composition selon une fraction massique comprise entre 20 % et 45 %, le produit de ladite réaction comprenant une chaîne polymérique dudit au moins un alcool polyvinylique qui est modifiée par ledit agent oxydant en étant rompue par ledit cation, la composition étant apte à éroder ledit substrat en en transférant une couche superficielle oxydée sur le film par un pelage du film effectué après ledit séchage.

2. Composition selon la revendication 1, dans laquelle ledit agent oxydant est présent dans ladite composition selon une fraction massique comprise entre 21 % et 35 %.

3. Composition selon la revendication 1 ou 2, dans laquelle ledit premier composant comprend en outre une charge inorganique choisie dans le groupe constitué par les alumines, les hydroxydes de magnésium, le dioxyde de titane, les silices hydrophiles et un mélange d'au moins deux de ces charges.

4. Composition selon la revendication 3, dans laquelle ladite charge inorganique comprend ledit dioxyde de titane selon un ratio massique dioxyde de titane / cation métallique supérieur à 0,4 et de préférence compris entre 1 et 1,4.

5. Composition selon la revendication 3 ou 4, dans laquelle ledit dioxyde de titane est présent dans la composition selon une fraction massique comprise entre 20 % et 42 %.

6. Composition selon une des revendications 3 à 5, dans laquelle la composition comprend, selon une fraction massique comprise entre 0,5 % et 10 %, une dite silice hydrophile à titre d'agent épaississant.

7. Composition selon une des revendications précédentes, dans laquelle ledit cation métallique dudit agent oxydant est choisi parmi le cérium IV, le cobalt II et l'argent I.

8. Composition selon la revendication 7, dans laquelle ledit cation est le cérium IV, ledit complexe étant de préférence choisi parmi les nitrates de cérium et d'ammonium, les sulfates de cérium et les nitrates de cérium électro-régénérés en milieu acide.

9. Composition selon une des revendications précédentes, dans laquelle ladite réaction est mise en œuvre en milieu acide, la composition présentant un pH inférieur à 3, de préférence compris entre 0,5 et 2, et étant apte à décaper par attaque acide ledit substrat qui est métallique ou non métallique, par exemple minéral.

10. Composition selon la revendication 9, dans laquelle :
- ledit au moins un alcool polyvinylique comporte des groupes acide, de préférence des groupes acide acétique issus d'une hydrolyse de groupes acétate, et/ou
- ledit second composant comprend en outre un acide minéral présent dans la composition selon une fraction massique de préférence comprise entre 0,1 % et 4 %, par exemple l'acide nitrique.

11. Composition selon une des revendications précédentes, dans laquelle ledit au moins un alcool polyvinylique est un homopolymère ou un copolymère d'alcool vinylique, partiellement ou totalement hydrolysé avec un degré molaire d'hydrolyse supérieur à 70 %, de préférence égal ou supérieur à 80 %, et présente une viscosité Brookfield mesurée à 20° C comprise entre 10 mPa.s et 50 mPa.s.

12. Composition selon une des revendications précédentes, dans laquelle la composition présente lors de ladite application une viscosité dynamique Brookfield, mesurée à 20° C, qui est inférieure à 5000 mPa.s et de préférence comprise entre 1000 mPa.s et 3000 mPa.s.

13. Composition selon une des revendications précédentes, dans laquelle la composition comprend :
- ledit au moins un alcool polyvinylique selon une fraction massique comprise entre 20 % et 60 %, de préférence entre 25 % et 45 %,
- ledit solvant aqueux selon une fraction massique comprise entre 1 % et 5 %, et
- ledit agent oxydant.

14. Composition selon la revendication 13, dans laquelle ledit premier composant comprend en outre :
- une charge inorganique selon une fraction massique dans la composition comprise entre 20 % et 45 %,
- un agent plastifiant selon une fraction massique dans la composition comprise entre 1 % et 10 %, comprenant de préférence du glycérol selon une fraction massique dans la composition entre 3 % et 6 %, et
- un agent de mise en forme selon une fraction massique dans la composition comprise entre 0,5 % et 3 %.

15. Procédé de préparation d'une composition polymérique aqueuse selon une des revendications précédentes, **caractérisé en ce qu'**il comprend, immédiatement avant ladite application, un mélangeage :
- dudit premier composant comprenant ledit solvant aqueux, ledit au moins un alcool polyvinylique comportant optionnellement des groupes acide, et une pluralité d'ingrédients de mise en œuvre comprenant de préférence une charge inorganique, un agent plastifiant et un agent de mise en forme, et
- dudit second composant comprenant ledit agent oxydant, et optionnellement un acide minéral, de préférence de l'acide nitrique.

16. Film pelable obtenu par application d'une composition polymérique aqueuse sur un substrat à décontaminer ou dépolluer, puis par séchage de la composition appliquée sur le substrat de telle sorte que le film adhère au substrat, **caractérisé en ce que** le film pelable est obtenu par séchage d'une composition selon une des revendications 1 à 14 et est apte à éroder le substrat par pelage en transférant sur le film pelé une couche superficielle du substrat d'épaisseur supérieure à 0,10 µm pour 0,5 à 2 kg/m² de la composition appliquée sur le substrat.

17. Film pelé obtenu par pelage d'un film pelable selon la revendication 16, **caractérisé en ce que** le film pelé présente une face interne séparée du substrat et revêtue de ladite couche superficielle, laquelle est :
- métallique, par exemple en acier inoxydable, ou bien
- non métallique, par exemple minérale telle qu'en béton, ledit au moins un alcool polyvinylique comportant dans ce cas des groupes acide et/ou ledit second composant comprenant un acide minéral, de préférence de l'acide nitrique.

18. Film pelé selon la revendication 17, dans lequel ladite couche superficielle présente une épaisseur supérieure à 0,30 µm et de préférence égale ou supérieure à 1 µm.

19. Procédé d'obtention d'un film pelable selon la revendication 16, **caractérisé en ce qu'**il comprend successivement :
a) une préparation de la composition selon le procédé de la revendication 15,
b) au moins une application par exemple au pinceau, au rouleau ou à la spatule de la composition sur ledit substrat immédiatement après l'étape a), puis
c) un séchage de la composition appliquée à une température comprise entre 10 et 30° C et pendant une durée comprise entre 6 et 72 heures, de préférence entre 24 heures et 48 heures.

## Patentansprüche

1. Wässrige Polymerzusammensetzung, die nach Aufbringen und anschließendem Trocknen auf einem zu dekontaminierenden oder zu reinigenden Substrat in der Lage ist, einen abziehbaren Film zu bilden, der eine Oberfläche des Substrats beschichtet, indem er darauf haftet, wobei die Zusammensetzung ein wässriges Lösungsmittel und mindestens einen in dem Lösungsmittel löslichen Polyvinylalkohol umfasst, **dadurch gekennzeichnet, dass** die Zusammensetzung das Produkt einer chemischen Reaktion zwischen einer ersten, filmbildenden Komponente und einer zweiten, oxidierenden Komponente der Zusammensetzung umfasst, wobei die erste Komponente das wässrige Lösungsmittel und den mindestens einen Polyvinylalkohol umfasst, wobei die zweite Komponente ein Oxidationsmittel umfasst, das aus einem Komplex mit metallischem Kation gebildet ist und in der Zusammensetzung in einem Massenanteil zwischen 20% und 45% vorliegt, wobei das Reaktionsprodukt eine Polymerkette des mindestens einen Polyvinylalkohols umfasst, die mit dem Oxidationsmittel derart modifiziert ist, dass sie durch das Kation unterbrochen ist, wobei die Zusammensetzung in der Lage ist, das Substrat zu erodieren, indem sie eine oxidierte Oberflächenschicht davon auf den Film durch Abziehen des ausgebildeten Films nach dem Trocknen überträgt.

2. Zusammensetzung nach Anspruch 1, wobei das Oxidationsmittel in der Zusammensetzung in einem Massenanteil zwischen 21% und 35% vorliegt.

3. Zusammensetzung nach Anspruch 1 oder 2, wobei die erste Komponente weiter einen anorganischen Füllstoff enthält, ausgewählt aus der Gruppe bestehend aus Aluminiumoxiden, Magnesiumhydroxiden, Titandioxid, hydrophilem Siliciumdioxid und einem Gemisch von mindestens zwei dieser Füllstoffe.

4. Zusammensetzung nach Anspruch 3, wobei der anorganische Füllstoff das Titandioxid in einem Massenverhältnis von Titandioxid / metallischem Kation von mehr als 0,4 und bevorzugt zwischen 1 und 1,4 umfasst.

5. Zusammensetzung nach Anspruch 3 oder 4, wobei das Titandioxid in der Zusammensetzung in einem Massenanteil zwischen 20% und 42% vorliegt.

6. Zusammensetzung nach einem der Ansprüche 3 bis 5, wobei die Zusammensetzung, in einem Massenanteil zwischen 0,5% und 10%, ein hydrophiles Siliciumdioxid als Verdickungsmittel umfasst.

7. Zusammensetzung nach einem der vorhergehenden Ansprüche, wobei das metallische Kation des Oxidationsmittels ausgewählt ist aus Cer(IV), Cobalt(II) und Silber(I).

8. Zusammensetzung nach Anspruch 7, wobei das Kation Cer(IV) ist, wobei der Komplex vorzugsweise ausgewählt ist aus Nitraten von Cer und Ammonium, Cersulfaten, und in saurem Medium elektroregenerierten Cernitraten.

9. Zusammensetzung nach einem der vorhergehenden Ansprüche, wobei die Reaktion in saurem Medium durchgeführt wird, wobei die Zusammensetzung einen pH-Wert von weniger als 3, vorzugsweise zwischen 0,5 und 2, aufweist und die in der Lage ist, durch Säureangriff das Substrat, das metallisch oder nicht-metallisch, z.B. mineralisch, ist, abzuätzen.

10. Zusammensetzung nach Anspruch 9, wobei:
- der mindestens eine Polyvinylalkohol Säuregruppen, vorzugsweise Essigsäuregruppen, die aus einer Hydrolyse von Acetatgruppen stammen, umfasst und/oder
- die zweite Komponente weiter eine Mineralsäure umfasst, die in der Zusammensetzung in einem Massenanteil von vorzugsweise zwischen 0,1% und 4% vorhanden ist, z.B. Salpetersäure.

11. Zusammensetzung nach einem der vorhergehenden Ansprüche, wobei der mindestens eine Polyvinylalkohol ein Vinylalkohol-Homopolymer oder -Copolymer ist, das teilweise oder vollständig hydrolysiert ist, mit einem molaren Hydrolysegrad von mehr als 70%, vorzugsweise gleich oder mehr als 80% und eine Brookfield-Viskosität, gemessen bei 20°C, zwischen 10 mPa.s und 50 mPa.s aufweist.

12. Zusammensetzung nach einem der vorhergehenden Ansprüche, wobei die Zusammensetzung beim Aufbringen eine dynamische Brookfield-Viskosität aufweist, gemessen bei 20°C, die niedriger als 5000 mPa.s ist und vorzugsweise zwischen 1000 mPa.s und 3000 mPa.s liegt.

13. Zusammensetzung nach einem der vorhergehenden Ansprüche, wobei die Zusammensetzung umfasst:
- den mindestens einen Polyvinylalkohol in einem Massenanteil zwischen 20% und 60%, vorzugsweise zwischen 25% und 45%,
- das wässrige Lösungsmittel in einem Massenanteil zwischen 1% und 5% und
- das Oxidationsmittel.

14. Zusammensetzung nach Anspruch 13, wobei die erste Komponente weiter umfasst:
- einen anorganischen Füllstoff in einem Massenanteil in der Zusammensetzung zwischen 20% und 45%,
- einen Weichmacher in einem Massenanteil in der Zusammensetzung zwischen 1% und 10%, umfassend vorzugsweise Glycerin in einem Massenanteil in der Zusammensetzung zwischen 3% und 6%, und
- ein formgebendes Mittel in einem Massenanteil in der Zusammensetzung zwischen 0,5% und 3%.

15. Verfahren zur Herstellung einer wässrigen Polymerzusammensetzung nach einem der vorhergehenden Ansprüche, **dadurch gekennzeichnet, dass** es, unmittelbar vor dem Aufbringen, Mischen
- der ersten Komponente, die das wässrige Lösungsmittel, den mindestens einen Polyvinylalkohol, der gegebenenfalls Säuregruppen umfasst, und mehrere Verarbeitungshilfsstoffe, umfassend vorzugsweise einen anorganischen Füllstoff, einen Weichmacher und ein formgebendes Mittel, umfasst und
- der zweiten Komponente, die das Oxidationsmittel und gegebenenfalls eine mineralische Säure, vorzugsweise Salpetersäure, umfasst,
umfasst.

16. Abziehbarer Film, erhalten durch Aufbringen einer wässrigen Polymerzusammensetzung auf ein zu dekontaminierendes oder zu reinigendes Substrat, dann durch Trocknen der auf das Substrat aufgebrachten Zusammensetzung derart, dass der Film an dem Substrat haftet, **dadurch gekennzeichnet, dass** der abziehbare Film erhalten wird durch Trocknen einer Zusammensetzung nach einem der Ansprüche 1 bis 14 und in der Lage ist, das Substrat durch Abziehen zu erodieren, indem auf den abgezogenen Film eine Oberflächenschicht des Substrats mit einer Dicke von größer als 0,10 µm für 0,5 bis 2 kg/m² der auf das Substrat aufgebrachten Zusammensetzung übertragen wird.

17. Abgezogener Film, erhalten durch Abziehen eines abziehbaren Films nach Anspruch 16, **dadurch gekennzeichnet, dass** der abgezogene Film eine von dem Substrat getrennte und mit der Oberflächenschicht beschichtete Innenseite aufweist, die:
- metallisch, z.B. aus Edelstahl, oder
- nicht-metallisch, z.B. mineralisch, wie z.B. aus Beton, ist, wobei der mindestens eine Polyvinylalkohol in diesem Fall Säuregruppen umfasst und/oder die zweite Komponente eine mineralische Säure, vorzugsweise Salpetersäure, umfasst.

18. Abgezogener Film nach Anspruch 17, wobei die Oberflächenschicht eine Dicke von mehr als 0,30 µm und vorzugsweise gleich oder mehr als 1 µm aufweist.

19. Verfahren zum Erhalt eines abziehbaren Films nach Anspruch 16, **dadurch gekennzeichnet, dass** es aufeinanderfolgend umfasst:
a) eine Herstellung der Zusammensetzung gemäß dem Verfahren des Anspruchs 15,
b) mindestens ein Aufbringen, z.B. mit einem Pinsel, einer Walze oder einem Spachtel, der Zusammensetzung auf das Substrat unmittelbar nach Schritt a), danach
c) ein Trocknen der aufgebrachten Zusammensetzung bei einer Temperatur zwischen 10 und 30°C und über einen Zeitraum zwischen 6 und 72 Stunden, vorzugsweise zwischen 24 Stunden und 48 Stunden.

## Claims

1. Aqueous polymeric composition capable of forming, after application followed by drying on a substrate to be decontaminated or depolluted, a peelable film coating a surface of the substrate adhering thereto, the composition comprising an aqueous solvent and at least one polyvinyl alcohol soluble in said solvent, **characterised in that** the composition comprises the product of a chemical reaction between a first film-forming component and a second oxidising component of the composition, said first component comprising said aqueous solvent and said at least one polyvinyl alcohol, said second component comprising an oxidising agent formed from a metallic cation complex and present in the composition according to a mass fraction between 20% and 45%, the product of said reaction comprising a polymeric chain of said at least one polyvinyl alcohol which is modified by said oxidising agent by being ruptured by said cation, the composition being capable of eroding said substrate by transferring an oxidised superficial layer thereof onto the film by a peeling of the film performed after said drying.

2. Composition according to claim 1, wherein said oxidising agent is present in said composition according to a mass fraction between 21% and 35%.

3. Composition according to claim 1 or 2, wherein said first component further comprises an inorganic filler selected from the group consisting of aluminas, magnesium hydroxides, titanium dioxide, hydrophilic silicas and a mixture of at least two of these fillers.

4. Composition according to claim 3, wherein said inorganic filler comprises said titanium dioxide according to a mass ratio of titanium dioxide / metallic cation greater than 0.4 and preferably between 1 and 1.4.

5. Composition according to claim 3 or 4, wherein said titanium dioxide is present in the composition according to a mass fraction between 20% and 42%.

6. Composition according to one of claims 3 to 5, wherein the composition comprises, according to a mass fraction between 0.5% and 10%, a said hydrophilic silica as a thickening agent.

7. Composition according to one of the preceding claims, wherein said metallic cation of said oxidising agent is selected from cerium IV, cobalt II and silver I.

8. Composition according to claim 7, wherein said cation is cerium IV, said complex being preferably selected from cerium and ammonium nitrates, cerium sulphates and cerium nitrates electro-regenerated in acid medium.

9. Composition according to one of the preceding claims, wherein said reaction is implemented in an acid medium, the composition having a pH less than 3, preferably between 0.5 and 2, and being capable of stripping by acid attack said substrate which is metallic or non-metallic, for example mineral.

10. Composition according to claim 9, wherein:
- said at least one polyvinyl alcohol includes acid groups, preferably acetic acid groups derived from acetate group hydrolysis, and/or
- said second component further comprises a mineral acid present in the composition according to a mass fraction preferably between 0.1% and 4%, for example nitric acid.

11. Composition according to one of the preceding claims, wherein said at least one polyvinyl alcohol is a homopolymer or a copolymer of vinyl alcohol, partially or completely hydrolysed with a molar degree of hydrolysis greater than 70%, preferably equal to or greater than 80%, and has a Brookfield viscosity measured at 20°C between 10 mPa.s and 50 mPa.s.

12. Composition according to one of the preceding claims, wherein the composition has during said application a Brookfield dynamic viscosity, measured at 20°C, which is less than 5000 mPa.s and preferably between 1000 mPa.s and 3000 mPa.s.

13. Composition according to one of the preceding claims, wherein the composition comprises:
- said at least one polyvinyl alcohol according to a mass fraction between 20% and 60%, preferably between 25% and 45%,
- said aqueous solvent according to a mass fraction between 1% and 5%, and
- said oxidising agent.

14. Composition according to claim 13, wherein said first component further comprises:
- an inorganic filler according to a mass fraction in the composition between 20% and 45%,
- a plasticising agent according to a mass fraction in the composition between 1% and 10%, preferably comprising glycerol according to a mass fraction in the composition between 3% and 6%, and
- a forming agent according to a mass fraction in the composition between 0.5% and 3%.

15. Method for preparing an aqueous polymeric composition according to one of the preceding claims, **characterised in that** it comprises, immediately before said application, a mixing:
- of said first component comprising said aqueous solvent, said at least one polyvinyl alcohol optionally including acid groups, and a plurality of processing ingredients preferably comprising an inorganic filler, a plasticising agent and a forming agent, and
- of said second component comprising said oxidising agent, and optionally a mineral acid, preferably nitric acid.

16. Peelable film obtained by applying an aqueous polymeric composition on a substrate to be decontaminated or depolluted, then by drying the composition applied on the substrate such that the film adheres to the substrate, **characterised in that** the peelable film is obtained by drying a composition according to one of claims 1 to 14 and is capable of eroding the substrate by peeling by transferring onto the peeled film a superficial layer of the substrate of thickness greater than 0.10 µm for 0.5 to 2 kg/m² of the composition applied on the substrate.

17. Peeled film obtained by peeling a peelable film according to claim 16, **characterised in that** the peeled film has an inner face separated from the substrate and coated with said superficial layer, which is:
- metallic, for example stainless steel, or indeed
- non-metallic, for example mineral such as concrete, said at least one polyvinyl alcohol including in this case acid groups and/or said second component comprising a mineral acid, preferably nitric acid.

18. Peeled film according to claim 17, wherein said superficial layer has a thickness greater than 0.30 µm and preferably equal to or greater than 1 µm.

19. Method for obtaining a peelable film according to claim 16, **characterised in that** it successively comprises:
a) a preparation of the composition according to the method of claim 15,
b) at least one application for example with a brush, roller or spatula of the composition onto said substrate immediately after step a), then
c) a drying of the composition applied at a temperature between 10 and 30°C and for a duration between 6 and 72 hours, preferably between 24 hours and 48 hours.
